**Europäisches Patentamt**

(19) **European Patent Office**

**Office européen des brevets**

(11) Veröffentlichungsnummer: **0 106 308**
**B1**

(12) # EUROPÄISCHE PATENTSCHRIFT

(45) Veröffentlichungstag der Patentschrift:
**28.12.88**

(51) Int. Cl.⁴: **A 01 B 79/00,** A 01 C 23/02,
A 01 B 13/08

(21) Anmeldenummer: **83110143.1**

(22) Anmeldetag: **11.10.83**

(54) **Vorrichtung zum Lockern landwirtschaftlich genutzten Bodens.**

(30) Priorität: **13.10.82 DE 3238003**

(43) Veröffentlichungstag der Anmeldung:
**25.04.84 Patentblatt 84/17**

(45) Bekanntmachung des Hinweises auf die Patenterteilung:
**28.12.88 Patentblatt 88/52**

(84) Benannte Vertragsstaaten:
**AT BE CH DE FR GB IT LI NL SE**

(56) Entgegenhaltungen:
**DE-A- 2 742 606**
**DE-B- 1 214 463**
**DE-C- 615 811**
**FR-A- 1 463 474**
**US-A- 1 739 765**
**US-A- 4 233 915**

(73) Patentinhaber: **Zinck, Eugen, Hüffelsheimer Strasse 2,**
**D-6550 Bad Kreuznach (DE)**

(72) Erfinder: **Zinck, Eugen, Hüffelsheimer Strasse 2,**
**D-6550 Bad Kreuznach (DE)**

(74) Vertreter: **Jackisch, Walter, Dipl.-Ing., Menzelstrasse 40,**
**D-7000 Stuttgart 1 (DE)**

## Beschreibung

Die Erfindung betrifft eine Vorrichtung nach dem Gattungsbegriff des Anspruches 1.

Aus DE-C 615 811 ist eine Bodenbearbeitungsmaschine mit den wesentlichen Merkmalen des Gattungsbegriffes bekannt, mit deren Hilfe der Boden für die Saatbestellung aufgelockert werden soll, indem periodisch auftretende Gasstösse in nach oben gebogene Hohlschare in den Boden geleitet werden, diesen aufreissen und nach oben werfen sollen. Oberhalb der nach oben zeigenden Öffnungen der Hohlschare sind Rippenbleche oder dergleichen angeordnet, gegen welche die aus dem Boden nach oben geworfenen Erdstücke geschleudert und dort zertrümmert werden sollen. Dabei sind die Hohlschare messerförmig ausgebildet. Es sind ferner rechenartig angeordnete Vormesser zur Zerteilung der Erde vor den nach oben gerichteten Ausströmöffnungen der Hohlschare angeordnet.

Diese bekannte Vorrichtung dient nicht dazu, einen zuvor unbearbeiteten, insbesondere verdichteten Boden von unten her aufzubrechen, um beispielsweise den Aufbruch des Bodens mittels mechanischer Einrichtungen, wie Pflügen oder dergleichen, zu vermeiden. Vielmehr wird bei dieser bekannten Vorrichtung infolge der rechenartig vor den nach oben gerichteten Ausströmöffnungen angeordneten Vormesser die Erde vor den Ausströmöffnungen der Hohlschare zerteilt und die so mechanisch zerteilte Erde durch die nachfolgenden aus den Hohlscharen austretenden Gasstösse nur noch hochgeschleudert und dabei weiter zerkleinert, um den grob vorzerkleinerten Boden für die Saatbettbereitung entsprechend weiter aufzulockern und zu zerkrümeln.

Demgegenüber ist eine Vorrichtung und ein Verfahren zum Lockern landwirtschaftlich genutzten Bodens, insbesondere zur Tiefenlockerung verdichteten Bodens bekannt (DE-A 27 42 606), bei dem zur Vermeidung des mechanischen Aufbrechens von Boden, beispielsweise durch Pflügen desselben, Druckluftstösse periodisch in den Boden eingespeist werden, die den Boden entlang seiner vorgegebenen Bruchstellen von unten nach oben aufbrechen, so dass das Bodengefüge im wesentlichen erhalten bleibt und keine mechanisch zwangsläufige Zerkleinerung des Bodens wie beim Fräsen, Pflügen oder beim Durchfahren des Bodens mittels messerartiger Werkzeuge nötig ist. Dabei wird nach diesem Verfahren unmittelbar im Anschluss an den eruptionsartigen Druckluftstoss, der den Boden aufbricht, Füllstoff, wie beispielsweise Humus, Torf, Kunststoffgranulat oder dergleichen, durch einen nachfolgenden Injektionsstoss eingeführt, derart, dass solche Substanzen, zu denen auch Düngstoffe gehören können, sich in den infolge des Eruptionsstosses gebildeten Hohlräumen, Adern, Rissen usw. anlagern und diese abstützen können, so dass diese infolge des Aufbruchs des Bodens gebildeten Risse, Adern usw. über längere Zeit als Wasser und Luft speichernde bzw. leitende Adern, Kanäle oder dergleichen erhalten bleiben. Bei diesem an sich bewährten Verfahren ist nachteilig, dass die Sonde im wesentlichen vertikal von oben in den Boden bis zu einer vorgegebenen Tiefe gedrückt werden muss, worauf die schlagartige Druckluftauflockerung des Bodens erfolgt. Die Sonde wird dann aus dem Boden wieder herausgezogen und muss in einer geeigneten Entfernung erneut in den Boden eingesetzt werden, um eine grössere Bodenfläche aufbrechen zu können. Das vertikale Einsetzen der Sonde in den Boden, Herausziehen und ihr erneutes Einsetzen muss so lange durchgeführt werden, bis die vorgesehene Bodenfläche bzw. der für die Behandlung vorgesehene Bereich des Bodens vollständig aufgelockert ist. Die bekannte Vorrichtung ist daher zu einer einfachen und wirtschaftlichen Auflockerung einer grösseren landwirtschaftlich genutzten Bodenfläche beispielsweise eines ganzen Feldes, bei dem die Bodenauflockerung anstelle des Pflügens nun durch Druckluft-Eruptionsstösse erfolgen soll, weniger geeignet.

Aus DE-B 12 14 463 ist ferner ein fahrbares Boden-Injektionsgerät zur Düngung und Schädlingsbekämpfung mit im Boden geführten, kegelförmigen Spritzdüsen bekannt. Es weist eine Spritzlanze mit Spritzdüse, einen Lanzenträger und ein Vorschneiderad auf, das mit verstellbarer Achslage an einem Tragarm gelagert ist. Das Vorschneiderad greift von oben in den Boden ein, lockert diesen durch Zerschneiden und bildet eine Furche, unterhalb der die im übrigen massiv ausgebildete Lanze mit einer mittleren Bohrung, durch welche das Spritzmittel unter hohem Druck unmittelbar vor dem Düsenmundstück in den gewachsenen Boden gepresst wird. Die kegelige massive Spitze der Düse verdichtet bei ihrer Vorwärtsbewegung den Boden nach allen Seiten, wobei unmittelbar vor der vorn liegenden Austrittsöffnung der Düse ein kleiner freier Bodenraum entsteht, in welchen der austretende Spritzmittelstrahl gelangt und einen hydraulischen Druck nach allen Seiten aufbaut, wodurch erreicht werden soll, dass das kontinuierlich, also dauernd eingespritzte Medium in die feinsten Poren des Bodens eindringt. Dabei wird die die Düse umgebende Bodenschicht ausserdem im Bereich des Kegelmantels der Lanzendüse zusätzlich verdichtet.

Diese bekannte Vorrichtung ist ausschliesslich zur Düngung, nicht aber zur Auflockerung des Bodens geeignet.

Die Aufgabe der Erfindung besteht darin, eine Vorrichtung zum Lockern landwirtschaftlich genutzten Bodens mit den Merkmalen des Gattungsbegriffes so auszubilden und zu verbessern, dass ein gleichmässigerer Arbeitsfluss und eine Leistungssteigerung, insbesondere durch eine optimale flächige Ausbreitung des Druckluftstosses und damit der Bodenlockerung unter Einsparung sich ständig wiederholender Sondeneinführungen erreicht wird.

Diese Aufgabe wird bei einer Vorrichtung der gattungsgemässen Art mit den Merkmalen des Kennzeichens des Anspruches 1 gelöst.

Mit der erfindungsgemässen Vorrichtung wird erreicht, dass der Boden kontinuierlich beim Vorwärtsfahren mit der Sonde über ein grossflächiges Feld vollständig aufgelockert wird, indem die Druckluft stossweise in Intervallen in den Boden eingebracht wird, dadurch Eruptionsauflockerungsbereiche durch Anheben des Bodens entstehen, wobei die Struktur des Bodens selbst keinerlei Schädigungen erfährt. Der Boden wird dabei insbesondere an den organisch vorgegebenen Bruchlinien aufgerissen und durchlässig gemacht, wobei annähernd gleichzeitig in unmittelbarem Anschluss an die Eruptionsstösse und das dadurch bedingte Anheben des Bodens infolge Anordnung einer Ejektorverbindung zwischen dem Vorratsbehälter für granulatartige Füllstoffe, beispielsweise Polystyrolkugeln und/oder Düngstoffe und der Sondenzuführleitung derartige Füllstoffe in die entstandenen Risse, Spalte usw. eingebracht werden, die einen Verbau der Eruptionsauflockerungsbereiche und damit die Erhaltung dieser Hohlräume für die Bewässerung und Belüftung bewirken. Die Sonde, die beispielsweise durch ein 80 cm langes Rohr gebildet sein kann, wird somit im wesentlichen horizontal, bzw. parallel zur Oberfläche des Bodens kontinuierlich bewegt, wodurch die unmittelbar aufeinanderfolgenden Eruptionsstösse immer wieder in einem räumlichen Abstand in den Boden eindringen und somit eine gleichmässig verteilte Bodenauflockerung in einem einzigen durchgehenden Arbeitsfluss ermöglicht wird. Vorteilhaft ist die Sonde an beiden Seiten mit sich gegenüberliegenden, etwa horizontal angeordneten Luftaustrittsöffnungen versehen, wodurch eine optimale Einspeisung der Druckluftstösse über den Boden erreicht wird, weil diese im wesentlichen etwa in horizontaler Richtung in den Boden eingeleitet werden und dadurch günstige und verhältnismässig breite, sich nach der Seite und nach oben in Richtung zur Bodenoberfläche erweiternde Eruptionsauflockerungsbereiche gebildet werden.

Für eine rationelle grossflächige Bodenauflockerung kann es günstig sein, mehrere Sonden nebeneinander auf Abstand an einem Traggestell anzuordnen. Die Sonden werden dabei vorzugsweise in einem Abstand von etwa 50 cm am Traggestell befestigt. Die Befestigung kann so ausgeführt sein, dass der Abstand zwischen den Sonden variiert werden kann, so dass auch kleinere oder grössere Abstände als 50 cm eingestellt werden können.

Die Druckluft kann von einem Kompressor erzeugt werden, der zweckmässig am Schlepper oder auch am Traggestell angeordnet sein kann. Zur Erzielung eines Ausgleichs bzw. Luftpolsters, wird die vom Kompressor erzeugte Druckluft zweckmässig zunächst in einen Druckluftbehälter geleitet, so dass stets ein ausreichendes Luftreservoir zur Verfügung steht. Von diesem Druckluftbehälter aus erfolgt die Versorgung der Sonde, wobei die Zuführung der Druckluft zur Sonde mindestens im Bodenbereich und dicht darüber durch eine feste Rohrleitung oder dergleichen geschieht, die den hier auftretenden Kräften sicher standhält. Vorteilhaft werden die Druckstösse in der Sonde über ein Ventil im Luftleitungssystem gesteuert. Dieses Ventil ist vorteilhaft als Schnellschlussventil ausgebildet, so dass ein exakt schlagartiger Druckstoss erzielt wird.

Vorteilhaft ist es, einen zusätzlichen Vorratsbehälter am Schlepper oder auch am Traggestell vorzusehen, der bevorzugt mit einem Füllstoff, wie beispielsweise Polystyrolkugeln für einen Verbau der Eruptionsauflockerungsbereiche oder mit einem Düngestoff gefüllt ist. Der Füll- bzw. Düngestoff kann über eine feste Rohrzuführung zur Sonde geleitet und in Intervallen in die Hohlräume des aufgelockerten Bodens eingebracht werden. Das Eindringen der Füll- bzw. Düngestoffe erfolgt unmittelbar kurz nach dem Druckluftstoss, wodurch die Füll- und Düngestoffe weit verteilt in die Hohlräume gelangen und diese verbauen können. Dabei sind die Intervalle für die Füll- und Düngestoffeinbringung so bemessen, dass sie praktisch gleich den Intervallen der Eruptionsstösse sind.

Die Sonde wird mit der Vorrichtung so tief in den Boden eingebracht, dass sie sich etwa im Bereich von 20 cm bis 100 cm unter der Bodenoberfläche befindet. Der bevorzugte Arbeitsbereich liegt etwa bei 50 cm bis 80 cm unterhalb der Bodenoberfläche. Es ist durchaus möglich, die Sonde noch tiefer in den Boden einzubringen, um auch bei besonderen Bodenverhältnissen eine optimale Eruptions- und Verbauwirkung zu erzielen.

Die Eruptionsstösse sind zeitlich vorteilhaft so aufeinander abzustimmen, dass während der Vorwärtsbewegung der Sonde durch den Boden die hintereinander erzeugten Eruptionsauflockerungsbereiche mit ihren Randbereichen unmittelbar aneinandergrenzen oder sich sogar überlappen, um eine durchgehend aufgelockerte Bodenfläche zu erreichen.

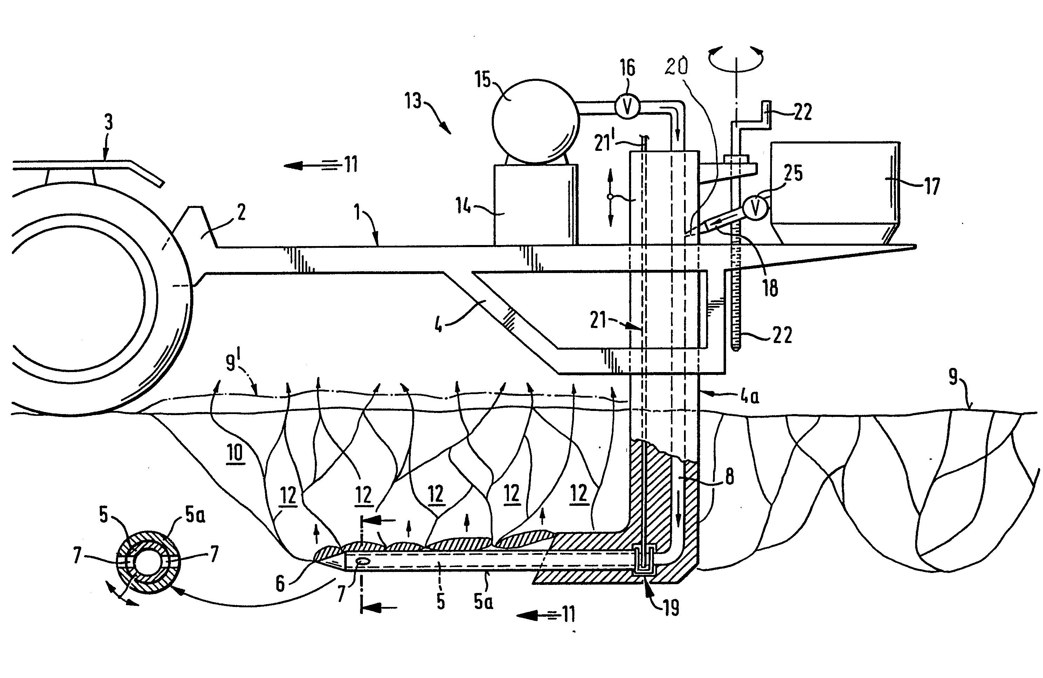

Bevorzugte Ausgestaltungen und Weiterbildungen sowie weitere Vorteile und Einzelheiten der Erfindung sind den Merkmalen der Unteransprüche, der nachfolgenden Beschreibung und der Zeichnung zu entnehmen, die in schematischer Darstellung in einer einzigen Figur eine bevorzugte Ausführungsform als Beispiel zeigt.

Die in der Zeichnung als Ausführungsbeispiel dargestellte Vorrichtung weist ein Traggestell 1 nach Art eines Pfluggrindels auf, das an einer Anhängevorrichtung 2 an der Hydraulik eines Schleppers 3 befestigt und über diese höhenverstellbar ist. Am Traggestell 1 ist in einer Halterung 4 beispielsweise eine Halterung mit Halte- und Verstelltasche ein vertikaler Schaft 4a mittels einer Verstellspindel 22 höhenverstellbar gegenüber dem Traggestell vorgesehen. In diesem Schaft 4a befindet sich die Leitung 8 für die Zufuhr von Druckluft und Füllstoff, wie Polystyrolperlen usw. bzw. für die Zufuhr des Luft-Füllstoffgemisches, das unmittelbar vorzugsweise innerhalb eines Bruchteiles einer Sekunde nach Einleiten des Druckluftstosses ausgetragen wird. Ferner ist in dem Schaft eine Verstellstange 21' oder dgl. einer das Sondenrohr 5 um seine Längsachse verdrehenden Drehvorrichtung 21 untergebracht. Die rohrförmige Sonde 5 weist eine Spitze 6 und vorzugsweise unmittelbar an diese anschliessend an beiden Seiten diametral gegenüberliegende Austrittsöffnungen 7 auf. Erfindungsgemäss ist also in dem Schaft 4a somit eine feste Leitung 8 zur Zufuhr von Druckluft für die Sonde 5 geschützt gelagert. Die Sonde 5 wird erfindungsgemäss von einem Mantel 5a koaxial umgeben und ist in diesem um ihre Längsachse derart drehbar gelagert, dass sie mittels der Drehvorrichtung 21 im Mantelrohr 5a periodisch im Takt der schlagartig austretenden Luft bzw. des Luftfüllstoffgemisches derart verdreht werden kann, dass ihre Austrittsöffnungen 7 jeweils nur für die Zeit des Austrittes von Druckluft und/oder Füllstoff in den Boden frei sind. Den Austrittsöffnungen 7 des Sondenrohres sind korrespondierende Austrittsöffnungen im Mantelrohr 5a zugeordnet. Durch diese erfindungsgemässe Ausbildung können während des Vorschubes die Öffnungen 7 der Sonde 5 geschlossen gehalten werden, so dass ein Verstopfen dieser Öffnungen bzw. der Sonde selbst durch Eindringen von Boden vermieden ist.

Die erfindungsgemässe Sondendrehvorrichtung 21 mit ihrem im Schaft 4a befindlichen Bedienungsgestänge oder dgl. weist im unteren Bereich einen Anschluss 19 für das Sondenrohr 5 auf, mit welchem die Verstellbewegung der Verstellstange 21′ in eine Drehbewegung der Sonde 5 zum Schliessen und Öffnen ihrer Austrittsöffnungen 7 umgesetzt wird.

Wie bereits dargelegt, kann der Tiefgang des Sondenrohres beispielsweise mit der schematisch dargestellten Tiefgang-Verstellspindel 22 zwischen beispielsweise 45 cm und 100 cm eingestellt werden. Je nach Leistung des Schleppers können eine oder mehrere derartige Einheiten nebeneinander an den Schlepper angebaut werden.

Wie aus der Zeichnung ersichtlich, kann die Sonde 5 etwa in einem Abstand von 60 cm unter der Bodenoberfläche 9 des Bodens 10 vorgesehen sein. Dabei liegt die Sonde 5 im wesentlichen parallel zur Bodenoberfläche 9. Ihre Spitze 6 weist in Fahrtrichtung des Schleppers 3 und somit in die Arbeitsrichtung gemäss Pfeil 11.

Die Spitze 6 der Sonde 5 mindert bei ihrem Vorschub den Bodenwiderstand. In ähnlicher Weise, beispielsweise schneidenförmig, kann auch der Schaft 4a ausgebildet sein.

Das Einschwenken der Sonde 5 mit ihrem Mantelrohr 5a auf die gewünschte Arbeitstiefe erfolgt dadurch, dass beim Einschwenken in kurzen Intervallen der Boden durch schlagartig eingeführte Luftdruckstösse aufgebrochen wird, so dass das Sondenrohr ohne grösseren Widerstand in die so gelockerte Erde und ohne Gefahr einer Beschädigung eindringen kann. Es ist denkbar, für dieses Einschwenken der erfindungsgemässen Vorrichtung in den Boden zusätzlich eine Fräsvorrichtung oder dgl. vorzusehen, die einen entsprechenden Einschwenkschlitz vor dem Einführen der Sonde in dem Boden herstellt und nach dem Einführen der Sonde wieder aus dem Boden gezogen wird. Das Ausschwenken der Sonde erfolgt ohne Schwierigkeiten bei stehendem Schlepper und einem entsprechenden Aufbruch des Bodens.

Der Schaft 4a wird, da er der Sondenspitze nachläuft, beim Vorschub durch den Boden 10 stets durch den zuvor aufgelockerten Bodenbereich gezogen, so dass der Bodenwiderstand verhältnismässig gering ist. Die Sonde 5 ist während des Vorschubes vom Erdreich, also vom Boden 10, an ihrem ganzen Umfang dicht umschlossen, so dass die Eruptionsstösse erfindungsgemäss schlagartig mit hoher Wirkung den Boden auflokkern können.

Bei dem schematisch dargestellten Ausführungsbeispiel ist auf dem Traggestell ein Druckerzeuger 13 vorgesehen, der auch am Schlepper 3 angeordnet sein kann. Der Druckerzeuger 13 umfasst einen Kompressor 14, der die angesaugte Luft komprimiert und in einen Druckluftbehälter 15 fördert. Von diesem Druckluftbehälter 15 aus gelangt die Luft über die Leitung 8 im Schaft 4a zur Sonde 5, wobei eine Steuerung der Druckluftstösse über ein vorzugsweise schnell schliessendes Ventil 16 erzielbar ist. Die Höhe des Druckes der in den Boden schlagartig einzubringenden Druckluft kann vorgewählt und während des kontinuierlichen Arbeitsablaufes und Vortriebes der Sonde verändert werden, so dass in jedem Fall eine entsprechend den Anforderungen zuverlässige Bodenauflockerung erzielt wird, wobei die hintereinander liegenden Eruptionsauflockerungsbereiche 12 zum Beispiel unmittelbar aneinandergrenzen oder sich auch etwas überlappen können, wodurch stets ein durchgehend aufgelockerter Bodenstreifen 9′ erreicht wird. Eine Steuerung der Eruptionsauflockerung kann zudem auch dadurch beeinflusst werden, dass die Frequenz der schlagartig eingeleiteten Eruptionsstösse in Abhängigkeit von der Transportgeschwindigkeit sowie von der Tiefe der Sonde 5 im Boden 10 veränderbar ist.

Der Druckerzeugungseinrichtung 13 ist zudem ein Vorratsbehälter 17 zugeordnet, in dem sich ein Füllstoff oder ein Düngestoff befinden kann. Der Füll- und/oder Düngestoff gelangt über eine Zuführung 18 zu dem Zuleitungsrohr 8 der Sonde 5. In der Zuführung 18 kann ein Regelventil 25 angeordnet sein. Vorteilhaft ist es, wenn der Füll- und/oder Düngestoff beispielsweise durch einen Injektor 20 zur Zufuhrleitung 8 gelangt.

Der Füll- und/oder Düngestoff kann in Intervallen, die im wesentlichen gleich den Intervallen der Eruptionsstösse sind, in den Boden 10 eingetragen werden.

Der Vorgang des eruptionsartigen Aufbruches des Bodens sowie seiner Verbauung durch sofort nach dem Aufbrechen des Bodens unter hohem Druck eingespeisten Gemisches von Druckluft und Verbauungsstoffen, wie Polystyrolperlen, Düngemittel usw., geschieht in folgender Weise:

Die Druckluft wird über eine Zuleitung mit extrem grossen Querschnitt vom Druckbehälter 15, dessen Volumen das Energiepotential festlegt, das für den Vorgang verfügbar ist, zu dem nur schematisch dargestellten Schnellschlussventil 16 geleitet. Der Querschnitt dieses Schnellschlussventiles muss ausreichend, und zwar möglichst gross dimensioniert sein. Durch das geschlossene Schnellschlussventil wird die dem Druckluftbehälter vom Verdichter 14 zugeleitete Druckluft im Behälter gespeichert. Durch Öffnen des Schnellschlussventiles 16 wird das gespeicherte Druckluft-Energiepotential schlagartig freigesetzt. Das Substrat wie Polystyrolperlen, Dünger oder sonstige Heilmittel für den Boden befinden sich in dem Behälter 17. Beim Öffnen des Schnellschlussventiles 16 wird zunächst der reinen Luft der Weg zur Zuleitung 8 und damit zum Sondenrohr 5 freigegeben. Selbstverständlich muss kurz vor der Bedienung des Schnellschlussventiles durch Drehen des Sondenrohres 5 im Mantelrohr 5a dafür gesorgt sein, dass die Austrittsöffnungen 7 des Sondenrohres 5 geöffnet sind. Diese Steuerung des Sondenrohres um seine Längsachse ist automatisch auf die Frequenz der Eruptionsstösse abgestellt. Der erfindungsgemässe Sondenrohrverschluss dient somit dem sicheren Arbeitsablauf, weil dadurch verhindert ist, dass beim Einpressen des Rohres bzw. bei dessen Vorschub im Boden eindringende Erde zu Verstopfungen führen kann. Wie bereits dargestellt, wird das Substrat oder der sogenannte Füllstoff mit der schlagartig austretenden Luft in die unmittelbar zuvor gebildeten Spalte, Risse oder Poren des aufgebrochenen Erdreiches hineingetragen und dort abgelagert. Für diesen gesamten Vorgang wird lediglich zwischen einer halben und einer Sekunde Zeit benötigt. Das Einmischen des Substrates erfolgt unmittelbar nach dem schlagartigen Freisetzen der Druckluft und genau in dem Augenblick des Aufbruches, also in dem Augenblick der höchsten Energiefreisetzung, also der höchsten Luftgeschwindigkeit und der stärksten Weitung der Spalte und Risse im Erdreich.

Diese Abstimmung des Aufbruch- und Einmischvorganges des Substrates ist eine wesentliche Voraussetzung für einen störungsfreien Arbeitsablauf sowie für die Vermeidung von Verstopfungen durch das Substrat. Hierzu sind ferner die Querschnitte der Leitungen des Schnellschlussventiles einer Injektordüse, des Sondenrohres und der Austrittsöffnungen aufeinander abzustimmen und in ein richtiges Verhältnis zum verfügbaren Energiepotential (Druck × Volumen des Druckbehälters) zu bringen.

Der Vorschub beim Einsatz des erfindungsgemässen Schlepperanbaugerätes erfolgt im sogenannten Kriechgang. Die Arbeitsbreite beim Einsatz einer Sonde beträgt je nach Arbeitstiefe und Bodenart sowie Bodenzustand zwischen 80 cm und 200 cm. Bei mehreren nebeneinander und parallel zueinander angeordneten Sonden ist vorzugsweise ein Übergreifen der Wirkungen vorzusehen, so dass sich bei beispielsweise drei Sonden eine Breite zwischen 150 cm und 450 cm bis 500 cm ergeben. Je tiefer gearbeitet wird, um so breiter ist die Wirkung. Ebenso steigt die Wirkung mit dem Grad vorhandener Verdichtungen.

Mit der erfindungsgemässen Vorrichtung ist es möglich, den Boden tiefer als mit herkömmlichen, mechanischen Verfahren, wie dem Pflügen, zu lockern, wobei ein wesentlich kleinerer Energieeinsatz als beispielsweise beim Pflügen mit Scharmessern erforderlich ist. Der weitere Vorteil ist, dass durch die Verbauung von Erdspalten und Rissen eine Langzeitwirkung erzielt wird, weil dadurch ein ausreichend dichtes Versorgungsadernetz, insbesondere nach mehrmaliger Anwendung, erreicht werden kann, so dass danach in vielen Fällen nur eine sehr flachgründige Saatbettbereitung erforderlich wird.

## Patentansprüche

1. Vorrichtung zum Lockern landwirtschaftlich genutzten Bodens (10), insbesondere zur Tiefenlockerung verdichteten Bodens, mittels mindestens einem durch den Boden geführten, Druckluftstösse freigebenden, als eine Sonde gestalteten Rohr (5), das an einem schleppergezogenen Gestell höhenbeweglich angeordnet ist, dadurch gekennzeichnet, dass das Rohr als im wesentlichen parallel zur Bodenoberfläche (9) im Boden (10) liegende Sonde, mit in Arbeitsrichtung (11) vorn liegender Spitze (6) ausgebildet ist und hinter der Spitze (6) auf beiden Seiten der Sonde (5) etwa horizontal gerichtete Luftaustrittsöffnungen (7) vorgesehen sind.

2. Vorrichtung nach Anspruch 1, dadurch gekennzeichnet, dass in Arbeitsrichtung mehrere Sonden (5) mit Abstand parallel nebeneinander am Traggestell (1) angeordnet sind.

3. Vorrichtung nach Anspruch 1 oder 2, dadurch gekennzeichnet, dass die Sonden (5) zur wahlweisen Veränderung des Abstandes zueinander am Traggestell (1) verstellbar befestigt sind.

4. Vorrichtung nach einem der Ansprüche 1 bis 3, dadurch gekennzeichnet, dass der Sonde (5) über eine feste Leitung (8) ein Kompressor (14), ein Druckluftbehälter (15) und ein Ventil (16) vorgeschaltet sind.

5. Vorrichtung nach Anspruch 4, dadurch gekennzeichnet, dass das Ventil (16) als Schnellschlussventil ausgebildet ist.

6. Vorrichtung nach einem der Ansprüche 1 bis 5, dadurch gekennzeichnet, dass der Sonde (5) über eine Zuführung (18) ein Füll- und/oder Düngestoff enthaltender Vorratsbehälter (17) zugeordnet ist.

7. Vorrichtung nach einem der Ansprüche 1 bis 6, dadurch gekennzeichnet, dass das Sondenrohr (5) von einem Mantelrohr (5a) koaxial umgeben ist und dass das Sondenrohr (5) in seiner Achsrichtung gegenüber dem Mantelrohr (5a) derart verdrehbar ist, dass die Austrittsöffnungen (7) der Sonde (5) bei Nichtaustritt von Druckluft und/oder Druckluft-Substratgemisch verschlossen sind.

8. Vorrichtung nach Anspruch 7, dadurch gekennzeichnet, dass das Mantelrohr (5a) zu den Austrittsöffnungen (7) der Sonde (5) korrespondierende Austrittsöffnungen aufweist, und dass dem Mantelrohr (5a) eine Verdrehvorrichtung (21) zugeordnet ist.

9. Vorrichtung nach einem der Ansprüche 7 oder 8, dadurch gekennzeichnet, dass die Verdrehvorrichtung (21) und die Zufuhrleitung (8) zur Sonde (5) in einem höhenverstellbaren Schaft (4a) vorgesehen sind.

10. Vorrichtung nach einem der Ansprüche 1 bis 9, dadurch gekennzeichnet, dass der Vorratsbehälter (17) zur unmittelbar an die Eruptionsdruckluftstösse anschliessenden Einspeisung von Füllstoffen, z.B. Polystyrolperlen, über einen Injektor (20) mit der Zuführleitung (8) zur Sonde (5) verbunden ist.

## Claims

1. A device for loosening soil (10) used for agricultural purposes, especially for loosening compacted subsoil, by means of at least one pipe (5) designed as a probe guided through the soil, releasing compressed air blasts, said pipe being arranged on a tractor-drawn frame such that it can be adjusted vertically, characterised in that the pipe is designed as a probe lying in the soil (10) essentially parallel to the surface (9) of the soil, with a point (6) located at the front end in the working direction (11), and that air exit openings (7) are provided in a roughly horizontal position on each side of the probe (5) behind the point (6).

2. A device according to claim 1, characterised in that several probes (5) are arranged on the carrying frame (1) at a distance from and parallel to one another in the working direction.

3. A device according to claim 1 or 2, characterised in that the probes (5) are attached to the carrying frame (1) in an adjustable fashion such that the spacing between them can be changed at will.

4. A device according to any one of claims 1 to 3, characterised in that a compressor (14), a compressed air container (15) and a valve (16) are connected upstream of the probe (5) by means of a fixed pipe (8).

5. A device according to claim 4, characterised in that the valve (16) is designed as a quick-action stop valve.

6. A device according to any one of claims 1 to 5, characterised in that a storage container (17) containing a filler and/or fertiliser is assigned to the probe (5) via a supply line (18).

7. A device according to any one of claims 1 to 6, characterised in that the probe pipe (5) is enclosed coaxially by a tubular jacket (5a), and that the probe pipe (5) is rotatable, in its axial direction, relative to the tubular jacket (5a) in such a way that the exit openings (7) of the probe (5) are closed when compressed air and/or compressed air-substrate mixture is/are not exiting.

8. A device according to claim 7, characterised in that the tubular jacket (5a) has exit openings corresponding to the exit openings (7) of the probe (5), and that a rotating device (21) is assigned to the tubular jacket (5a).

9. A device according to any one of claims 7 or 8, characterised in that the rotating device (21) and the supply line (8) to the probe (5) are provided in a shaft (4a) adjustable in height.

10. A device according to any one of claims 1 to 9, characterised in that the storage container (17) for the supply of fillers, eg. polystyrene beads, connected directly to the eruption compressed air blasts, is connected by an injector (20) to the supply line (8) to the probe (5).

## Revendications

1. Dispositif pour ameublir du sol à usage agricole, en particulier pour l'ameublissement en profondeur de sols compactés, au moyen d'un tube (5) réalisé sous la forme d'une sonde et qui, guidé à travers le sol et libérant des mouvements brutaux, ou coups, d'air comprimé, est monté de manière déplaçable en hauteur sur un châssis tiré par un tracteur, caractérisé en ce que le tube est réalisé sous la forme d'une sonde qui, s'étendant dans le sol (10) sensiblement parallèlement à la surface (9) du sol, a sa pointe située à l'avant dans le sens de travail (11) et en ce que derrière la pointe (6) sont prévus des deux côtés de la sonde (5) des orifices de sortie d'air orientés à peu près horizontalement.

2. Dispositif selon la revendication 1, caractérisé en ce que plusieurs sondes (5) sont disposées de façon espacée parallèlement les unes aux autres sur le châssis porteur (1).

3. Dispositif selon la revendication 1 ou 2, caractérisé en ce que les sondes (5) sont fixées de manière réglable au châssis (1) pour permettre de faire varier à volonté la distance entre elles.

4. Dispositif selon la revendication 1 ou 2, caractérisé en ce qu'en amont de la sonde (5) il est monté par l'intermédiaire d'un conduit (8) un compresseur (14), un récipient à air comprimé (15) et une soupape (16).

5. Dispositif selon la revendication 4, caractérisé en ce que la soupape (16) est une soupape à fermeture rapide.

6. Dispositif selon l'une quelconque des revendications précédentes, caractérisé en ce qu'à la sonde (5) est associé par l'intermédiaire d'un conduit d'amenée (18) un récipient de stockage (17) contenant des matières de remplissage et/ou fertilisantes.

7. Dispositif selon l'une quelconque des revendications précédentes, caractérisé en ce que le tube formant sonde (5) est entouré coaxialement par une gaine tubulaire (5a) et en ce que le tube formant sonde (5) peut être tourné dans sa direction axiale par rapport à la gaine tubulaire (5a) de telle manière que les orifices de sortie (7) de la sonde (5) sont fermés lorsqu'il n'en sort pas d'air comprimé et/ou de mélange air comprimé-substrat.

8. Dispositif selon la revendication 7, caractérisé en ce que la gaine tubulaire (5a) présente des orifices de sortie correspondant aux orifices de sortie (7) de la sonde (5) et en ce qu'à la gaine tubulaire (5a) est associé un dispositif de rotation (21).

9. Dispositif selon la revendication 7 ou 8, caractérisé en ce que le dispositif de rotation (21) et le conduit d'amenée (8) menant à la sonde (5) sont prévus dans un fourreau (4a) réglable en hauteur.

10. Dispositif selon l'une quelconque des revendications précédentes, caractérisé en ce que le récipient de stockage (17), en vue d'une alimentation en matières de remplissage, par exemple des perles de polystyrène, faisant suite immédiatement aux coups éruptifs d'air comprimé, est en communication par l'intermédiaire d'un injecteur (20) avec le conduit d'amenée (8) menant à la sonde (5).

EP 0 106 308 B1